(19) **Europäisches Patentamt
European Patent Office
Office européen des brevets**

(11) **EP 4 224 213 B1**

(12) **EUROPÄISCHE PATENTSCHRIFT**

(45) Veröffentlichungstag und Bekanntmachung des Hinweises auf die Patenterteilung:
**18.03.2026 Patentblatt 2026/12**

(21) Anmeldenummer: **23153005.6**

(22) Anmeldetag: **24.01.2023**

(51) Internationale Patentklassifikation (IPC):
**G01S 17/66** *(2006.01)* **G01C 15/00** *(2006.01)*
**G01S 7/481** *(2006.01)*

(52) Gemeinsame Patentklassifikation (CPC):
**G01S 17/66; G01C 15/002; G01S 7/4812**

(54) **VERFAHREN ZUR VERFOLGUNG EINES RETROREFLEKTORS UND VORRICHTUNG ZUR DURCHFÜHRUNG EINES DERARTIGEN VERFAHRENS**

METHOD FOR TRACKING A RETROREFLECTOR AND DEVICE FOR CARRYING OUT SUCH A METHOD

PROCÉDÉ DE SUIVI D'UN RÉTRORÉFLECTEUR ET DISPOSITIF POUR METTRE EN OEUVRE UN TEL PROCÉDÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **08.02.2022 DE 102022201293**

(43) Veröffentlichungstag der Anmeldung:
**09.08.2023 Patentblatt 2023/32**

(73) Patentinhaber: **Dr. Johannes Heidenhain GmbH
83301 Traunreut (DE)**

(72) Erfinder:
- **Meißner, Markus**
  **83236 Übersee (DE)**
- **Schwanecke, Alexander**
  **83301 Traunreut (DE)**
- **Tekles, Nikolas**
  **83132 Pittenhart (DE)**
- **Langrieger, Franz**
  **83308 Trostberg (DE)**

(56) Entgegenhaltungen:
**EP-B1- 2 118 682          US-A1- 2010 208 232
US-A1- 2018 259 328**

**Beschreibung**

## GEBIET DER TECHNIK

Die vorliegende Erfindung betrifft ein Verfahren zur Verfolgung eines im Raum beweglichen Retroreflektors und eine Vorrichtung zur Durchführung eines derartigen Verfahrens.

## STAND DER TECHNIK

Zur Bestimmung von dreidimensionalen Koordinaten im Raum sind Laser-Tracker seit längerem bekannt und werden z.B. bei der Vermessung großer Bauteile oder aber zur Kalibrierung von Werkzeugmaschinen eingesetzt. Entsprechende Laser-Tracker umfassen üblicherweise ein Interferometer zur hochgenauen Abstandsmessung zu einem im Raum beweglichen Retroreflektor, der am Messobjekt angebracht ist. Das von der Lichtquelle des Interferometers emittierte Mess-Lichtbündel wird dabei über eine Verfolgungsaktuatorik dem Retroreflektor automatisiert nachgeführt, der dieses entgegen der Einfallsrichtung wieder zurückreflektiert. Zur automatisierten Nachführung bzw. Verfolgung des Retroreflektors wird ein Teil des zurückreflektierten Mess-Lichtbündels über einen Strahlteiler ausgekoppelt und auf einen positionsempfindlichen Detektor geleitet. Abhängig von der Position des einfallenden Mess-Lichtbündels auf dem Detektor wird über eine Signalverarbeitungseinrichtung ein Nachführ-Regelungssignal erzeugt, das von der Verfolgungsaktuatorik genutzt wird, um das Mess-Lichtbündel dem Retroreflektor nachzuführen. Wird das Mess-Lichtbündel zwischen dem Retroreflektor und dem Detektor zeitweilig unterbrochen, kann kein Nachführ-Regelungssignal mehr erzeugt werden und eine Verfolgung des Retroreflektors ist nicht mehr möglich; man spricht in diesem Fall auch von einem "Verlieren" des Retroreflektors. Eine derartige Strahlunterbrechung kann beispielsweise durch ein Hindernis im Strahlweg des Mess-Lichtbündels verursacht werden. Nach der Strahlunterbrechung ist zur weiteren Messung erforderlich, den Retroreflektor möglichst schnell wiederzufinden, d.h. die Strahlunterbrechung sollte nur möglichst kurz ausfallen.

Eine Lösung für dieses Problem ist z.B. in der EP 2 118 682 B1 angegeben. So wird hier vorgeschlagen, auf Grundlage laufender Messungen ein Modell für den Bahnverlauf des Ziels bzw. den Abstand zum Ziel zu erstellen und das erstellte Modell zur Abschätzung der aktuellen Ziel-Position zu verwenden. Wird das Ziel im Verlauf der Messung verloren, so wird die geschätzte Position zur Suche nach dem Ziel genutzt. Nachteilig an dieser Lösung ist, dass im Fall einer ggf. längeren Strahlunterbrechung die tatsächliche Position des Retroreflektors erheblich von der geschätzten Position abweichen kann und der Retroreflektor deshalb nicht zuverlässig wiedergefunden wird.

## ZUSAMMENFASSUNG DER ERFINDUNG

Der vorliegenden Erfindung liegt die Aufgabe zugrunde, ein Verfahren sowie eine Vorrichtung zur Verfolgung eines im Raum beweglichen Retroreflektors anzugeben, worüber ein rasches und zuverlässiges Wiederfinden des Retroreflektors im Fall einer Strahlunterbrechung gewährleistet ist.

Diese Aufgabe wird erfindungsgemäß durch ein Verfahren mit den Merkmalen des Anspruchs 1 gelöst.

Ferner wird die oben genannte Aufgabe erfindungsgemäß durch eine Vorrichtung mit den Merkmalen des Anspruchs 10 gelöst.

Vorteilhafte Ausführungen des erfindungsgemäßen Verfahrens und der erfindungsgemäßen Vorrichtung ergeben sich aus den Maßnahmen, die in den jeweils abhängigen Ansprüchen aufgeführt sind.

Das erfindungsgemäße Verfahren dient zur Verfolgung eines im Raum beweglichen Retroreflektors. Dabei emittiert eine Lichtquelle ein Mess-Lichtbündel in Richtung des Retroreflektors, von dem dieses entgegen der Einfallsrichtung zurückreflektiert wird; zumindest ein Teil des zurückreflektierten Mess-Lichtbündels fällt auf einen positionsempfindlichen Detektor ein. Über eine Signalverarbeitungseinrichtung wird abhängig von der Position des Mess-Lichtbündels auf dem Detektor ein Nachführ-Regelungssignal erzeugt, wobei das Nachführ-Regelungssignal von einer Verfolgungsaktuatorik genutzt wird, um das Mess-Lichtbündel dem Retroreflektor nachzuführen. Über die Signalverarbeitungseinrichtung erfolgt laufend eine Zustands-Feststellung dahingehend, ob das Mess-Lichtbündel über die Verfolgungsaktuatorik dem Retroreflektor nachführbar ist oder ob der Retroreflektor verloren wurde. Im Fall eines festgestellten Verlusts des Retroreflektors wird in einem Suchbetrieb eine Trajektorienschätzung basierend auf Messwerten der Verfolgungsaktuatorik vorgenommen, um eine geschätzte Trajektorie des Retroreflektors für zukünftige Zeitpunkte zu bestimmen. Ferner werden Suchbereiche um die geschätzte Trajektorie für zukünftige Zeitpunkte bestimmt, wobei sich die Suchbereiche für unterschiedliche Zeitpunkte unterscheiden, und ein an die geschätzte Trajektorie und die bestimmten Suchbereiche angepasstes Suchmuster erstellt. Das Mess-Lichtbündel wird dann mit Hilfe der Verfolgungsaktuatorik über Nachführ-Regelungssignale entlang einer entsprechenden Suchbahn bewegt, wobei die Nachführ-Regelungssignale aus der geschätzten Trajektorie und dem bestimmten Suchmuster abgeleitet werden. Der Suchbetrieb wird beendet, sobald wieder ein Nachführ-Regelungssignal über den positionsempfindlichen Detektor erzeugbar ist.

Vorzugsweise werden dabei die räumlichen Suchbereiche um die geschätzte Trajektorie des Retroreflektors im Verlauf der Suche vergrößert.

Es ist möglich, dass das Mess-Lichtbündel entlang eines spiralförmigen Suchmusters wiederholt von einem Zentrum eines Suchbereichs zu einer Grenze des Suchbereichs und wieder zurück bewegt wird.

Dabei kann Mess-Lichtbündel entlang eines schlangenförmigen Suchmusters oszillierend um eine vorgegebene Richtung zwischen gegenüberliegenden Grenzen eines Suchbereichs hin und her bewegt werden.

Des Weiteren kann vorgesehen sein, dass das Mess-Lichtbündel zunächst über eine vorgegebene Zeitdauer mit einer ersten Geschwindigkeit entlang der geschätzten Trajektorie des Retroreflektors bewegt wird und nach der vorgegebenen Zeitdauer das Mess-Lichtbündel mit einer zweiten Geschwindigkeit, die höher als die erste Geschwindigkeit ist, oszillierend um die geschätzte Trajektorie bewegt wird, wobei sich im Verlauf der Suche die Oszillations-Amplitude vergrößert.

Vorzugsweise wird die Trajektorienschätzung mit Hilfe eines Kalman-Filters vorgenommen, über den die bis zum Verlust des Retroreflektors zurückgelegte Ist-Trajektorie des Retroreflektors extrapoliert wird.

Dabei können als Messwerte zur Trajektorienschätzung zumindest Winkelmesswerte der Verfolgungsaktuatorik herangezogen werden, die aus der Rotation des Mess-Lichtbündels um zwei senkrecht zueinander orientierte Rotationsachsen der Verfolgungsaktuatorik gewonnen werden.

Ferner ist möglich, dass über den Kalman-Filter des Weiteren Suchbereiche um die geschätzte Trajektorie für eine Mehrzahl von Zeitpunkten im Verlauf der Suche bestimmt werden.

Des Weiteren kann vorgesehen sein, dass zur Zustands-Feststellung die Intensität des auf den Detektor einfallenden Mess-Lichtbündels bestimmt, mit mindestens einem vorgegebenen Intensitäts-Schwellwert verglichen und abhängig vom Vergleichsergebnis die Zustands-Feststellung vorgenommen wird.

Die erfindungsgemäße Vorrichtung dient zur Verfolgung eines im Raum beweglichen Retroreflektors. Eine vorgesehene Lichtquelle emittiert ein Mess-Lichtbündel in Richtung des Retroreflektors, der dieses entgegen der Einfallsrichtung zurückreflektiert. Auf einen positionsempfindlichen Detektor fällt zumindest ein Teil des zurückreflektierten Mess-Lichtbündels ein.

Eine ferner vorgesehene Signalverarbeitungseinrichtung ist dazu ausgebildet und eingerichtet, um

- abhängig von der Position des Mess-Lichtbündels auf dem Detektor ein Nachführ-Regelungssignal zu erzeugen, wobei das Nachführ-Regelungssignal von einer Verfolgungsaktuatorik nutzbar ist, um das Mess-Lichtbündel dem Retoreflektor nachzuführen, und
- laufend eine Zustands-Feststellung dahingehend vorzunehmen, ob das Mess-Lichtbündel über die Verfolgungsaktuatorik dem Retroreflektor nachführbar ist oder ob der Retroreflektor verloren wurde, und
- im Fall eines festgestellten Verlusts des Retroreflektors in einem Suchbetrieb eine Trajektorienschätzung basierend auf Messwerten der Verfolgungsaktuatorik vorzunehmen, um eine geschätzte Trajektorie des Retroreflektors für zukünftige Zeitpunkte zu bestimmen, und
- Suchbereiche um die geschätzte Trajektorie für zukünftige Zeitpunkte zu bestimmen,wobei sich die Suchbereiche für unterschiedliche Zeitpunkte unterscheiden, und
- ein an die geschätzte Trajektorie und die bestimmten Suchbereiche angepasstes Suchmuster zu erstellen, und
- das Mess-Lichtbündel dann mit Hilfe der Verfolgungsaktuatorik über Nachführ-Regelungssignale entlang einer entsprechenden Suchbahn zu bewegen, wobei die Nachführ-Regelungssignale aus der geschätzten Trajektorie und dem bestimmten Suchmuster abgeleitet sind, und wobei
- eine Beendigung des Suchbetriebs erfolgt, sobald wieder ein Nachführ-Regelungssignal über den positionsempfindlichen Detektor erzeugbar ist.

Mit Vorteil ist die Signalverarbeitungseinrichtung ferner dazu ausgebildet und eingerichtet, um im Verlauf der Suche die räumlichen Suchbereiche um die geschätzte Trajektorie zu vergrößern.

Es ist möglich, dass die Verfolgungsaktuatorik zwei Antriebe umfasst, die eine Rotation des Mess-Lichtbündels um zwei zueinander orthogonale Rotationsachsen ermöglichen und jeder Rotationsachse eine Winkelmesseinrichtung zugeordnet ist, deren Winkelmesswerte die Signalverarbeitungseinrichtung zur Trajektorienschätzung verwendet.

Des Weiteren kann vorgesehen sein, dass der positionsempfindliche Detektor als 4-Quadranten-Diode oder als positionsempfindliche Diode ausgebildet ist.

Ferner kann die erfindungsgemäße Vorrichtung eine Optik-Baueinheit aufweisen, die mindestens zwei Strahlteiler, einen Referenz-Reflektor, eine Abstandsmessungs-Detektionseinheit sowie den positionsempfindlichen Detektor umfasst, wobei der Optik-Baugruppe ein von der Lichtquelle emittiertes Lichtbündel zuführbar ist, so dass

- das zugeführte Lichtbündel in der Optik-Baueinheit auf einen ersten Strahlteiler trifft, der das darauf einfallende Lichtbündel in das Mess-Lichtbündel und ein Referenz-Lichtbündel aufspaltet, und
- das Mess-Lichtbündel in Richtung des Retroreflektors und das Referenz-Lichtbündel in Richtung des Referenz-Reflektors propagiert, und
- das vom Referenz-Reflektor zurückreflektierte Referenz-Lichtbündel erneut auf den ersten Strahlteiler trifft, und
- das vom Retroreflektor zurückreflektierte Mess-Lichtbündel auf einen zweiten Strahlteiler trifft, über den die Auskopplung eines Teils des Mess-Lichtbündels auf den positionsempfindlichen Detektor erfolgt und der restliche Teil des zurückreflektierten Mess-Lichtbündels erneut auf den ersten Strahlteiler trifft, wo eine Überlagerung mit dem Referenz-Lichtbündel erfolgt, und

- das überlagerte Mess- und Referenz-Lichtbündel in Richtung der Abstandsmessungs-Detektionseinheit propagiert.

Als maßgeblicher Vorteil der erfindungsgemäßen Maßnahmen ist anzuführen, dass darüber sichergestellt ist, auch bei einer ggf. längeren Strahlunterbrechung der Retoreflektor zuverlässig wiedergefunden werden kann. Dies wird im Wesentlichen dadurch erreicht, dass bei der Suche berücksichtigt wird, dass im Verlauf der Strahlunterbrechung die Unsicherheit bei der Abschätzung der Retroreflektor-Trajektorie zunimmt. Auf diese Art und Weise lässt sich die Wahrscheinlichkeit eines schnellen Wieder-Findens des Retroreflektors erheblich erhöhen. Hierzu sind grundsätzlich keine weiteren Komponenten erforderlich; weiterhin muss die jeweilige Mess-Applikation nicht komplett unterbrochen und ggf. zurückgesetzt werden.

Weitere Einzelheiten und Vorteile der vorliegenden Erfindung seien anhand der nachfolgenden Beschreibung von Ausführungsbeispielen der erfindungsgemäßen Vorrichtung sowie des erfindungsgemäßen Verfahrens in Verbindung mit den Figuren erläutert.

## KURZE BESCHREIBUNG DER ZEICHNUNGEN

Es zeigt

Figur 1a     eine Teil-Darstellung eines Ausführungsbeispiels der erfindungsgemäßen Vorrichtung;

Figur 1b     ein stark schematisiertes Blockschaltbild mit verschiedenen Funktions-Komponenten der erfindungsgemäßen Vorrichtung;

Figur 2     eine schematisierte Darstellung einer möglichen Strahlunterbrechung;

Figur 3     eine schematisierte Darstellung zur Erläuterung des erfindungsgemäßen Verfahrens;

Fig. 4a - 4c     jeweils ein erstes Beispiel eines Suchmusters im Verlauf der Retroreflektor-Suche;

Figur 5     eine Darstellung der Bahn des Mess-Lichtbündels, resultierend aus der Überlagerung des Suchmusters aus den Figuren 4a - 4c mit einer geschätzten Trajektorie des Retroreflektors;

Figur 6a - 6d     jeweils ein zweites Beispiel eines Suchmusters im Verlauf der Retroreflektor-Suche;

Figur 7     eine Darstellung zur Erläuterung einer weiteren Variante zur Suche des Retroreflektors;

Figur 8     ein Flussdiagramm zu Erläuterung des grundsätzlichen Vorgehen im Rahmen des erfindungsgemäßen Verfahrens.

## BESCHREIBUNG DER AUSFÜHRUNGSFORMEN

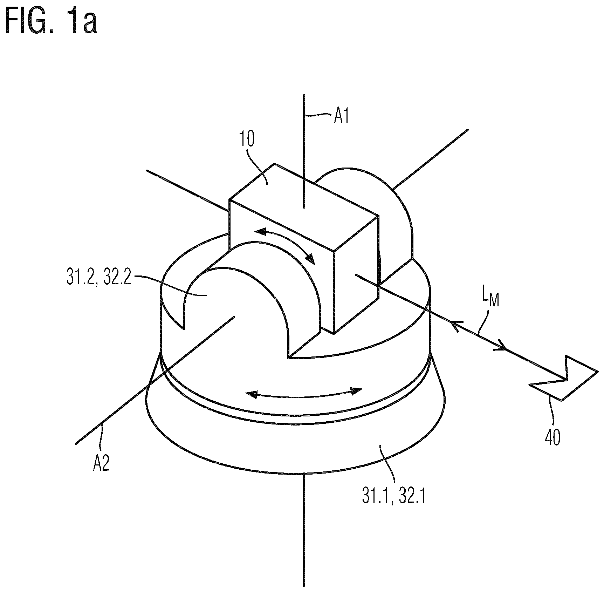

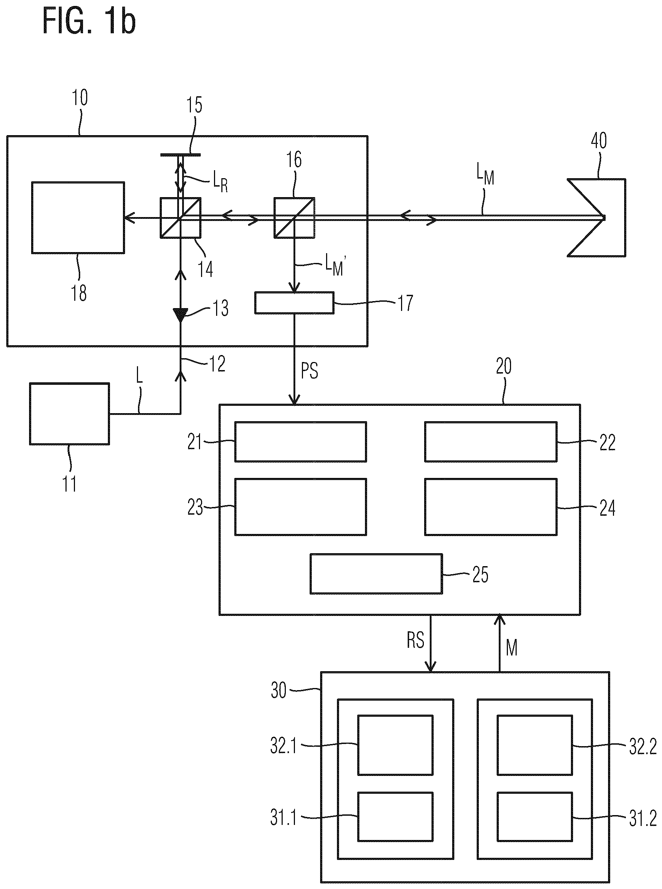

Ein Ausführungsbeispiel der erfindungsgemäßen Vorrichtung sei nachfolgend anhand der Figuren 1a und 1b erläutert; Figur 1a zeigt hierbei einen Teil der entsprechenden Vorrichtung, Figur 1b ein stark schematisiertes Blockschaltbild mit einer Reihe von Funktions-Komponenten dieser Vorrichtung.

Die in den Figuren dargestellte Vorrichtung dient zur Bestimmung der räumlichen Position eines im Raum beweglichen Retroreflektors 40, der über diese Vorrichtung verfolgt wird. Hierzu werden mehrere Abstandsmessungen zwischen einem nicht dargestellten Referenzpunkt und dem Retroreflektor durchgeführt; aus diesen kann dann über bekannte Verfahren die räumliche Position des Retroreflektors 40 bestimmt werden. Der Retroreflektor 40 ist z.B. an einer beweglichen Komponente einer Werkzeugmaschine angeordnet, die mit Hilfe der erfindungsgemäßen Vorrichtung kalibriert werden soll. Zur Abstandsmessung dient im vorliegenden Ausführungsbeispiel ein interferometrisches Messverfahren.

Mit Hilfe einer Verfolgungsaktuatorik 30 wird ein von einer Lichtquelle 11 über eine Optik-Baueinheit 10 emittiertes Mess-Lichtbündel $L_M$ dabei dem Retroreflektor 40 nachgeführt und möglichst mittig auf den Retroreflektor 40 ausgerichtet. Hierzu umfasst die Verfolgungsaktuatorik 30 im vorliegenden Ausführungsbeispiel zwei Antriebe 31.1, 31.2, die ein Verschwenken des Mess-Lichtbündels $L_M$ um zwei senkrecht zueinander orientierte Rotationsachsen A1, A2 ermöglichen; diese werden auch als Azimutachse (A1) und Elevationsachse (A2) der entsprechenden Vorrichtung bezeichnet. Zur Verfolgungsaktuatorik 30 gehören ferner zwei Winkelmesseinrichtungen 32.1, 32.2, die den beiden Antrieben 31.1, 31.2 zugeordnet sind und über die die Rotationsbewegungen des Mess-Lichtbündels $L_M$ um die beiden Rotationsachsen A1, A2 messtechnisch erfasst werden können. Die beiden Winkelmesseinrichtungen 32.1, 32.2 erzeugen damit als Messwerte MW jeweils Winkelmesswerte, die die Rotation des Mess-Lichtbündels $L_M$ um die beiden Rotationsachsen A1, A2 charakterisieren.

Das vorliegend zur Abstandsmessung genutzte Interferometer umfasst einerseits einen entlang des nachgeführten Mess-Lichtbündels $L_M$ ausgebildeten Messarm zwischen einem ersten Strahlteiler 14 und dem beweglichen Retroreflektor 40. Anderseits wird ein Referenzarm des Interferometers zwischen dem ersten Strahlteiler 14 und einem stationären Referenz-Reflektor 15 in der Optik-Baueinheit 10 entlang eines Referenz-Lichtbündels $L_R$ ausgebildet. Am ersten Strahlteiler 14 erfolgt demzufolge die Aufspaltung des von der Lichtquelle 11, z.B. einem geeigneten Laser, emittierten und über einen Lichtwellenleiter 12 und einen Faser-Kollimator 13 zugeführten Lichtbündels L in ein Mess-Lichtbündel $L_M$ und ein Referenz-Lichtbündel $L_R$. Sowohl vom beweglichen Retroreflektor 40 im Messarm wie auch vom stationären Referenz-Reflektor 15 im Referenzarm werden die entsprechenden Lichtbündel $L_M$, $L_R$ entgegen der Einfallsrichtung zurückreflektiert. Hierbei durchläuft das Mess-Strahlenbündel $L_M$ in der Optik-Baueinheit 10 zunächst einen zweiten Strahlteiler 16, über den ein Teil des Mess-Lichtbündels $L_M$' auf einen positionsempfindlichen Detektor 17 ausgekoppelt wird. Der restliche bzw. nicht-ausgekoppelte Teil des Mess-Lichtbündels $L_M$ trifft anschließend wie auch das zurückreflektierte Referenz-Lichtbündel $L_R$ wieder auf den ersten Strahlteiler 14, wo die beiden Lichtbündel $L_M$, $L_R$ überlagert werden. Vom ersten Strahlteiler 14 aus propagiert dann ein interferierendes Paar von Lichtbündeln $L_M$, $L_R$ in Richtung einer Abstandsmessungs-Detektionseinheit 18. Aus dem darüber detektierten Interferenzsignal kann in bekannter Art und Weise eine Abstandsinformation in Bezug auf den Retroreflektor 40 gewonnen werden. Das in der dargestellten Vorrichtung genutzte interferometrische Abstandsmessungs-Verfahren ist dabei nicht erfindungswesentlich, d.h. hierzu können unterschiedlichste bekannte relativ- oder absolutmessende Abstandsmessungs-Verfahren genutzt werden.

Als Retroreflektor 40 dienen in der erfindungsgemäßen Vorrichtung z.B. Tripelspiegel, Glas-Tripelprismen oder Kugeln mit einem Brechungsindex n = 2. Identisch hierzu kann auch der stationäre Referenz-Reflektor 15 ausgebildet werden.

Zur Verfolgung des im Raum beweglichen Retroreflektors 40 wird - wie bereits vorstehend erwähnt - ein Teil des vom Retroreflektor 40 zurückreflektierten Mess-Lichtbündels $L_M$ am zweiten Strahlteiler 16 ausgekoppelt und fällt gemäß Figur 1b als Mess-Lichtbündel $L_M$' auf die Empfangsfläche des nachgeordneten positionsempfindlichen Detektors 17 ein; dieser kann z.B. als Vier-Quadranten-Diode oder aber als positionsempfindliche Diode (PSD) ausgebildet sein.

Der positionsempfindliche Detektor 17 ist mit einer Signalverarbeitungseinheit 20 verbunden, die abhängig von der Position des Mess-Lichtbündels $L_M$' auf dem Detektor 17 ein Nachführ-Regelungssignal RS erzeugt. Das Nachführ-Regelungssignal RS wird von der Verfolgungsaktuatorik 30 genutzt, um das Mess-Lichtbündel $L_M$ dem im Raum beweglichen Retroreflektor 40 nachzuführen. Hierzu wird über eine Signalerfassungseinheit 21, an die vom Detektor 17 erzeugte Positionssignale PS übermittelt werden, überprüft, ob das ausgekoppelte Mess-Lichtbündel $L_M$' auf das Zentrum des Detektors 17 oder ggf. versetzt hierzu einfällt. Liegt ein Versatz vor, so wird über eine Regelungseinheit 23 das versatz-abhängige Nachführ-Regelungssignal RS für die Verfolgungsaktuatorik 30 erzeugt, um die Antriebe 31.1, 31.2 entsprechend anzusteuern und das Mess-Lichtbündel $L_M$ dem Retroreflektor 40 nachzuführen, so dass das ausgekoppelte Mess-Lichtbündel $L_M$' möglichst wieder auf das Zentrum des Detektors 17 einfällt. Im Rahmen der vorliegenden Beschreibung sei der Einfachheit halber von einem Nachführ-Regelungssignal RS die Rede. In der Praxis werden mit Hilfe der Regelungseinheit 23 natürlich separate Nachführ-Regelungssignale für die beiden Antriebe 31.1, 31.2 der Verfolgungsaktuatorik 30 erzeugt, über die das Mess-Lichtbündel $L_M$ zur Nachverfolgung des Retroreflektors 40 im Raum verschwenkt wird; d.h. unter dem Ausdruck Nachführ-Regelungssignal RS sind selbstverständlich auch eine Mehrzahl derartiger Signale zu verstehen, die der Verfolgungsaktuatorik 30 zugeführt werden können.

Während des Messbetriebs erfolgt über die Signalverarbeitungseinheit 20 bzw. die ihr zugeordnete Zustandsfeststellungseinheit 22 laufend eine Überprüfung bzw. Zustands-Feststellung dahingehend, ob das Mess-Lichtbündel $L_M$ des Messarms über die Verfolgungsaktuatorik 30 dem Retoreflektor 40 nachführbar ist oder ob der Retroreflektor 40 ggf. verloren wurde. Letzteres kann eintreten, wenn - wie eingangs erwähnt - eine Strahlunterbrechung vorliegt und damit die Sichtverbindung zwischen der Optik-Baueinheit 10 und dem Retoreflektor 40 beispielsweise durch ein Hindernis im Strahlweg über längere Zeit unterbrochen ist, während sich gleichzeitig der Retroreflektor 40 im Raum weiterbewegt. Zur Zustands-Feststellung ist dabei im vorliegenden Ausführungsbeispiel vorgesehen, dass laufend die Intensität des auf den Detektor 17 einfallenden Mess-Lichtbündels $L_M$' bestimmt und mit einem vorgegebenen Intensitäts-Schwellwert verglichen wird. Abhängig vom Vergleichsergebnis wird über die Zustandsfeststellungseinheit 22 die Zustands-Feststellung vorgenommen. Liegt hierbei die Intensität unter dem Intensitäts-Schwellwert, so gilt der Retroreflektor 40 wegen einer Strahl-Unterbrechung als verloren, da dann kein Nachführ-Regelungssignal RS auf Grundlage eines ermittelten Versatzes des auf den Detektor 17 einfallenden Mess-Lichtbündels $L_M$ mehr erzeugbar ist. Es muss anschließend in einem Suchbetrieb die Suche nach dem Retroreflektor 40 in der noch im Detail zu beschreibenden, erfindungsgemäßen Art und Weise eingeleitet werden.

Die Zustands-Feststellung bezüglich eines eventuellen Verlusts des Retroreflektors 40 muss in der erfindungsgemäßen Vorrichtung bzw. beim erfindungsgemäßen Verfahren im Übrigen nicht zwingend mit Hilfe des positionsempfindlichen Detektors 17 erfolgen; hierzu könnte alternativ etwa auch die Intensität des über die Abstandsmessungs-Detektionseinheit 18 erzeugten Signals von der Zustandsfeststellungseinheit 22 herangezogen und mit einem geeigneten Intensitäts-Schwellwert verglichen werden.

Wird über das erläuterte Vorgehen festgestellt, dass der Retroreflektor 40 verloren wurde, so erfolgt im Anschluss in einem Suchbetrieb die weitere Nachführung des Mess-Lichtbündels $L_M$ bzw. die Suche des Retroreflektors 40 über eine Trajektorienschätzung. Dies bedeutet, dass die Positionen des Retroreflektors während der Strahl-Unterbrechung geschätzt und die Positionen entlang einer geschätzten Trajektorie $T_{est}$ für die erforderliche Suche nach dem Retroreflektor 40 genutzt werden. Hierzu zieht die Trajektorienschätzeinheit 24 Messwerte MW der Verfolgungsaktuatorik 30 heran, insbesondere Winkelmesswerte der Winkelmesseinrichtungen 32.1, 32.2, die die Rotationsbewegungen des Mess-Lichtbündels $L_M$ um die beiden Rotationsachsen A1, A2 charakterisieren. Für die Trajektorienschätzung genutzt werden dabei entsprechende Messwerte MW aus einem Zeitraum, in dem die Nachführung des Mess-Lichtbündels $L_M$ in der oben beschriebenen Art und Weise im Messbetrieb noch möglich war. Das heißt, hierzu werden Messwerte MW der Winkelmesseinrichtungen 32.1, 32.2 der Verfolgungsaktuatorik 30 genutzt, die bis zum Eintreten der Strahlunterbrechung bzw. bis zum Verlust des Retroreflektors 40 im Messbetrieb erzeugt wurden. Details der Trajektorienschätzung werden im Verlauf der nachfolgenden Beschreibung noch näher erläutert.

Aus der Trajektorienschätzung erzeugt die Regelungseinheit 23 im Suchbetrieb schließlich Nachführ-Regelungssignale RS für die Verfolgungsaktuatorik 30, um das Mess-Lichtbündel $L_M$ in einem bestimmten räumlichen Suchbereich $S_i$ (i = 1, 2, ...) entlang der geschätzten Trajektorie $T_{est}$ des Retroreflektors 40 während der Strahlunterbrechung zu bewegen. Der Suchbereich $S_i$ (i = 1, 2, ...) ändert sich hierbei wie nachfolgend noch erläutert wird im Verlauf der Suche, d.h. für unterschiedliche Zeitpunkte ti (i = 1, 2, ...) während der Suche gibt es unterschiedliche Suchbereiche $S_i$ (i = 1, 2, ...). Das Mess-Lichtbündel $L_M$ folgt während der Suche somit nicht exakt der geschätzten Trajektorie $T_{est}$, sondern sucht in einem vorgesehenen Suchbereich $S_i$ (i = 1, 2, ...) um die geschätzte Trajektorie $T_{est}$ einen größeren Raumbereich ab. Die Richtung des von der Optik-Baueinheit 10 emittierten Mess-Lichtbündels $L_M$ weicht während der Suche nach dem verloreneren Retroreflektor 40 damit gezielt von der geschätzten Trajektorie $T_{est}$ ab. Der vom Mess-Lichtbündel $L_M$ dabei überstrichene Suchbereich $S_i$ (i = 1, 2, ...) entspricht hierbei einem bestimmten Unsicherheits-Bereich um die geschätzte Trajektorie $T_{est}$ des Retroreflektors 40, in dem sich der verlorene Retroreflektor 40 befinden könnte. Der entsprechende Unsicherheitsbereich bzw. Suchbereich $S_i$ (i = 1, 2, ...) wird wie die geschätzte Trajektorie $T_{est}$ ebenfalls über die Trajektorienschätzeinheit 24 für eine Mehrzahl von Zeitpunkten $t_i$ (i = 1, 2, ...) im Verlauf der Suche bestimmt. Typischerweise hat ein derartiger Unsicherheitsbereich oftmals die geometrische Form einer Ellipse, weshalb diesbezüglich im Folgenden auch von einer Unsicherheitsellipse die Rede ist.

Innerhalb des Unsicherheits- bzw. Suchbereichs $S_i$ (i = 1, 2, ...) bewegt sich das Mess-Lichtbündel $L_M$ während der Suche entlang eines definiert vorgegebenen Suchmusters SM um die geschätzte Trajektorie $T_{est}$. Dabei kann grundsätzlich auch vorgesehen werden, dass ein entsprechender Suchbereich $S_i$ (i = 1, 2, ...) mehrfach abgesucht wird; über dieses Vorgehen kann die Wahrscheinlichkeit erhöht werden, den Retroreflektor möglichst rasch wiederzufinden. Hinsichtlich geeigneter Suchroutinen und Suchmuster SM, die über eine Suchmustererzeugungseinheit 25 generiert werden, sei auf die nachfolgende Beschreibung von Ausführungsbeispielen verwiesen.

Insbesondere erweist sich im Rahmen der vorliegenden Erfindung als vorteilhaft, wenn der räumliche Suchbereich $S_i$ (i = 1, 2, ...) um die geschätzte Trajektorie $T_{est}$ des Retroreflektors 40 im Verlauf der Suche vergrößert wird. Hierüber wird berücksichtigt, dass sich der Retroreflektor 40 im Suchbetrieb im Verlauf der Suche zunehmend von der geschätzten Trajektorie $T_{est}$ entfernen kann. Der Vergrößerung des räumlichen Suchbereichs $S_i$ (i = 1, 2, ...) liegt dabei die Überlegung zugrunde, dass die Bewegung des Retroreflektors 40 zu Beginn zwar nur in einem geringen Umfang von der geschätzten Trajektorie $T_{est}$ abweichen kann, der nicht beliebig groß sein kann. Je länger die Strahlunterbrechung aber andauert, umso mehr kann durch Änderungen der Geschwindigkeit und Beschleunigung die Position des Retroreflektors 40 von der geschätzten Trajektorie $T_{est}$ abweichen.

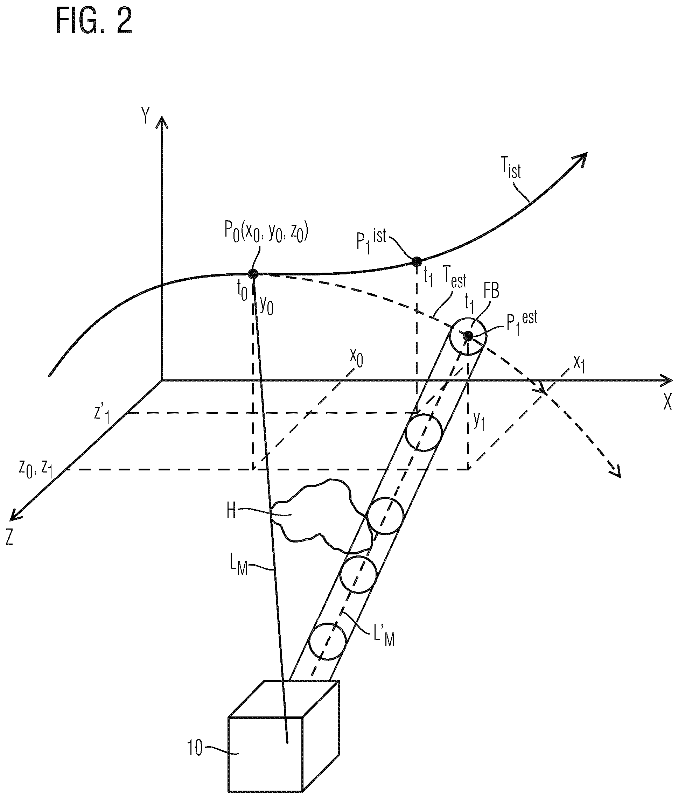

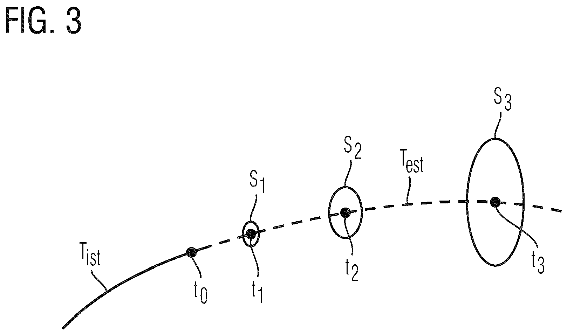

Anhand der Figuren 2 und 3 werden im Folgenden die vorgenannten Überlegungen anschaulich erläutert. So ist in Figur 2 dargestellt, wie sich zum Zeitpunkt $t_0$ am Ort $P_0(x_0, y_0, z_0)$ ein Hindernis H in die Sichtlinie zwischen der Optik-Baueinheit 10 und den - nicht dargestellten - Retroreflektor schiebt, der sich bis zu diesem Zeitpunkt im Messbetrieb entlang der Ist-Trajektorie $T_{ist}$ bewegt. Ab dem Zeitpunkt $t_0$ kann demzufolge kein Nachführ-Regelungssignal mehr mit Hilfe der Positionssignale des Detektors erzeugt werden, d.h. das Mess-Lichtbündel $L_M$ kann dem Retroreflektor nicht mehr nachgeführt werden, der Retroreflektor wurde verloren. Über die Trajektorienschätzeinheit wird sodann wie oben erläutert eine geschätzte Trajektorie $T_{est}$ des Retroreflektors bestimmt, die in Figur 2 strichliniert dargestellt ist. Wie in der Figur gezeigt, weicht die tatsächliche Trajektorie bzw. die Ist-Trajektorie $T_{ist}$ des Retroreflektors mit der Zeit immer weiter von der geschätzten Trajektorie $T_{est}$ ab. Wenn zum Zeitpunkt $t_1$ die Sichtlinie zwischen der Optik-Baueinheit 10 und dem Retroreflektor wieder frei wird, kann die Abweichung der geschätzten Trajektorie $T_{est}$ und der tatsächlichen Position des Retroreflektors auf der Ist-Trajektorie $T_{ist}$ bereits erheblich sein, nämlich insbesondere größer als der sogenannte Fangbereich FB der erfindungsgemäßen Vorrichtung bzw. des positionsempfindlichen Detektors. Der Fangbereich FB ist in Figur 2 zum Zeitpunkt $t_1$ durch den kreisscheibenförmigen Bereich um das Mess-Lichtbündel $L_M$' angegeben und beschreibt den Bereich, innerhalb dessen eine Abweichung der Retroreflektor-Position von der Ist-Trajektorie $T_{ist}$ bzw. der geschätzten Trajektorie $T_{est}$ ausgeregelt werden kann und eine Verfolgung durch das Mess-Lichtbündel $L_M$' auf Grundlage der mit Hilfe des Detektors erzeugbaren Nachführ-Regelungssignale nach wie vor möglich ist. Zum Zeitpunkt $t_1$ befindet sich der Retroreflektor demnach am Ort $P_1^{ist}$ auf der Ist-Trajektorie $T_{ist}$ und nicht wie abgeschätzt am Ort $P_1^{est}$ auf der geschätzten Trajektorie $T_{est}$. Würde das Mess-Lichtbündel $L_M$' im Beispiel der Figur 2 im Suchbetrieb also exakt der geschätzten Trajektorie $T_{est}$ folgen, so ließe sich bei einer längeren Strahlunterbrechung der verlorene Retroreflektor nicht zuverlässig wiederfinden.

Von daher ist gemäß der vorliegenden Erfindung vorgesehen, dass das Mess-Lichtbündel im Suchbetrieb in einem bestimmten räumlichen Suchbereich um die geschätzte Trajektorie $T_{est}$ des Retroreflektors bewegt wird. Der entsprechende Suchbereich ist hierbei so zu wählen, dass die Wiederfind-Wahrscheinlichkeit möglichst groß ist. Vorzugsweise ist darüber hinaus noch vorgesehen, dass im Verlauf der Suche der jeweilige Suchbereich vergrößert wird. Damit steigt die Wahrscheinlichkeit, den Retroreflektor rasch wiederzufinden und den Messbetrieb fortführen zu können. Das entsprechende Vorgehen ist in Figur 3 stark schematisiert veranschaulicht. Wiederum resultiert zum Zeitpunkt $t_0$ der Verlust des Retroreflektors, der sich bis dahin auf der Ist-Trajektorie $T_{ist}$ bewegt hat. Über die Trajektorienschätzung wird die geschätzte Trajektorie $T_{est}$ für die anschließend Suche nach dem Retroreflektor bestimmt. Für die nachfolgenden Zeitpunkte $t_1$, $t_2$, $t_3$ während der Suche ist darüber hinaus jeweils ein räumlicher Suchbereich $S_1$, $S_2$, $S_3$ in Form einer Unsicherheitsellipse in der Figur gezeigt. Wie ersichtlich, wird der Suchbereich $S_1$, $S_2$, $S_3$ dabei im Verlauf der Suche vergrößert, d.h. der Suchbereich $S_2$ zum Zeitpunkt $t_2$ bzw. die entsprechende Unsicherheitsellipse ist größer als der Suchbereich $S_1$ zum vorhergehenden Zeitpunkt $t_1$ usw.. Der Grund hierfür ist die Tatsache, dass die Bewegung des Retroreflektors zum Zeitpunkt $t_0$ des Retroreflektor-Verlusts oder danach einer Änderung von Geschwindigkeit, Beschleunigung oder Ruck unterworfen sein kann. Eine gleichförmige Weiter-Schätzung der Trajektorie würde diese Änderungen nicht erfassen und somit nicht die tatsächliche Trajektorie wiederspiegeln.

Im Folgenden soll eine mögliche Vorgehensweise zur Trajektorienschätzung beim Verlust des Retroreflektors skizziert werden. So wird nach der entsprechenden Zustands-Feststellung über die Trajektorienschätzung die bisherige Ist-Trajektorie des Retroreflektors in eine geschätzte Trajektorie extrapoliert. Dabei basiert die Trajektorienschätzung zumindest auf den Messwerten MW der Winkelmesseinrichtungen der Verfolgungsaktuatorik, die die Rotationen um die Rotationsachsen erfassen, d.h. auf den entsprechenden Winkelmesswerten. Darüber hinaus ist es jedoch auch möglich, dass für die Trajektorienschätzung noch zusätzliche Informationen aus dem Zeitraum vor der Strahlunterbrechung herangezogen werden, beispielsweise ermittelte Abstände zum Retroreflektor, Geschwindigkeits-, Beschleunigungs- und Ruckinformationen in den Rotationsachsen sowie in der gemessenen Länge etc..

Vorzugsweise erfolgt die Trajektorenschätzung bzw. Extrapolation der Ist-Trajektorie in der vorliegenden Erfindung mit Hilfe eines sogenannten Kalman-Filters. Ein Kalman-Filter ist ein iterativer Zustandsschätzer, mit dem Position, Ort, Geschwindigkeit und Beschleunigung des Retroreflektors geschätzt werden können. Die entsprechende Schätzung von Position, Geschwindigkeit und Beschleunigung erfolgt hierbei laufend aus den von den Winkelmesseinrichtungen erzeugten Messwerten während des Messbetriebs der erfindungsgemäßen Vorrichtung. Resultiert dann zu einem bestimmten Zeitpunkt eine Strahlunterbrechung und damit ein Verlust des Retroreflektors, so ergeben die zu diesem Zeitpunkt vorliegenden, gültigen Schätzungen von Position $\hat{\psi}$, Geschwindigkeit $\hat{\dot{\psi}}$ und Beschleunigung $\hat{\ddot{\psi}}$ die Extrapolation

$$\psi(\tau) = \hat{\psi} + \hat{\dot{\psi}} \cdot \tau + \frac{1}{2}\hat{\ddot{\psi}} \cdot \tau^2 \qquad \text{(Gl. 1)}$$

In Gl. 1 stellt $\tau$ die verstrichene Zeit seit dem Eintreten der Strahlunterbrechung dar.

Im Folgenden sei beispielhaft das mögliche Design eines Kalman-Filters für die Rotations- bzw. Azimutachse skizziert, der aus Messungen einer Winkelmesseinrichtung den Azimutwinkel, die Azimutwinkelgeschwindigkeit und die Azimutwinkelbeschleunigung schätzt.

Der Kalman-Filter schätzt hierbei einen Zustandsvektor, der wie folgt gewählt wird

$$\begin{bmatrix} \psi \\ \dot{\psi} \\ \ddot{\psi} \end{bmatrix}$$

mit:

$\psi$ := Azimutwinkel
$\dot{\psi}$ := Azimutwinkelgeschwindigkeit
$\ddot{\psi}$ := Azimutwinkelbeschleunigung.

Die Prozessdynamik des Kalman-Filters, d.h. d.h. das Zeitverhalten des Zustandsvektors, kann dann wie folgt modelliert werden:

$$\frac{d}{dt}\begin{bmatrix} \psi \\ \dot{\psi} \\ \ddot{\psi} \end{bmatrix} = \begin{bmatrix} 0 & 1 & 0 \\ 0 & 0 & 1 \\ 0 & 0 & 0 \end{bmatrix}\begin{bmatrix} \psi \\ \dot{\psi} \\ \ddot{\psi} \end{bmatrix} + \boldsymbol{w} \qquad \text{(Gl. 2)}$$

Die Messgleichung für die Winkelmesseinrichtung an der Azimutachse lautet in diesem Modell

$$y = \begin{bmatrix} 1 & 0 & 0 \end{bmatrix} \begin{bmatrix} \psi \\ \dot{\psi} \\ \ddot{\psi} \end{bmatrix} + v \qquad \text{(Gl. 3)}$$

In den Gleichungen 2) und 3) stellen die Größen w und v Rauschterme dar.

In Bezug auf die aus diesem Modell resultierenden Gleichungen, welche beschreiben, wie etwa die erzeugten Winkelmesswerte zu Schätzungen des Zustandsvektors verrechnet werden können, sei an dieser Stelle auf die einschlägige Fachliteratur verwiesen, z.B. das Fachbuch, "Optimal State Estimation - Kalman, H∞, and Nonlinear Approaches" , Dan Simon, Verlag John Wiley & Sons Inc., 2006.

Neben dem Zustandsvektor bzw. der geschätzten Trajektorie, bestehend aus Position, Geschwindigkeit, Beschleunigung und optional weiteren Schätzgrößen, schätzt der Kalman-Filter darüber hinaus auch die Unsicherheit, d.h. die Kovarianzmatrix, seiner Zustandsschätzung. Der Kalman-Filter dient also auch dazu, die Unsicherheit in der Trajektorienschätzung zu quantifizieren und damit anzugeben, welche Abweichungen der Trajektorienschätzung vom wahren Ortes des Retroreflektors zu erwarten sind. Insbesondere kann über den Kalman-Filter auch der zeitliche Verlauf dieser Unsicherheiten quantifiziert werden. Es kann somit zu jedem Zeitpunkt ein Bereich um die geschätzte Position des Retroreflektors angegeben werden, in dem sich dieser mit großer Wahrscheinlichkeit aufhält. In Figur 3 sind wie bereits erläutert die Unsicherheitsbereiche in Form dreier Unsicherheitsellipsen um die geschätzte Trajektorie $T_{est}$ zu den drei Zeitpunkten $t_1$, $t_2$ und $t_3$ gezeigt. Die entsprechenden Unsicherheitsbereiche fungieren im Suchbetrieb als räumliche Suchbereiche $S_i$ (i = 1, 2, ...), in denen entlang der geschätzten Trajektorie $T_{est}$ nach dem verlorenen Retroreflektor gesucht wird. Der Kalman-Filter dient damit auch zur Bestimmung der Suchbereiche $S_i$ (i = 1, 2, ...) während des Suchbetriebs.

Die vom Kalman-Filter geschätzte Trajektorie sowie damit bestimmten, zeitabhängigen Unsicherheiten bilden damit im Suchbetrieb die Grundlage für die Nachführung des Mess-Lichtbündels ab einer Strahlunterbrechung bis zum Wiederfinden des Retroreflektors. Das im Suchbetrieb vorgesehene Absuchen eines definierten räumlichen Suchbereichs entlang der geschätzten Trajektorie hängt dabei von der vom Kalman-Filter geschätzten Unsicherheit ab, bzw. von der zum jeweiligen Zeitpunkt geltenden Unsicherheitsellipse.

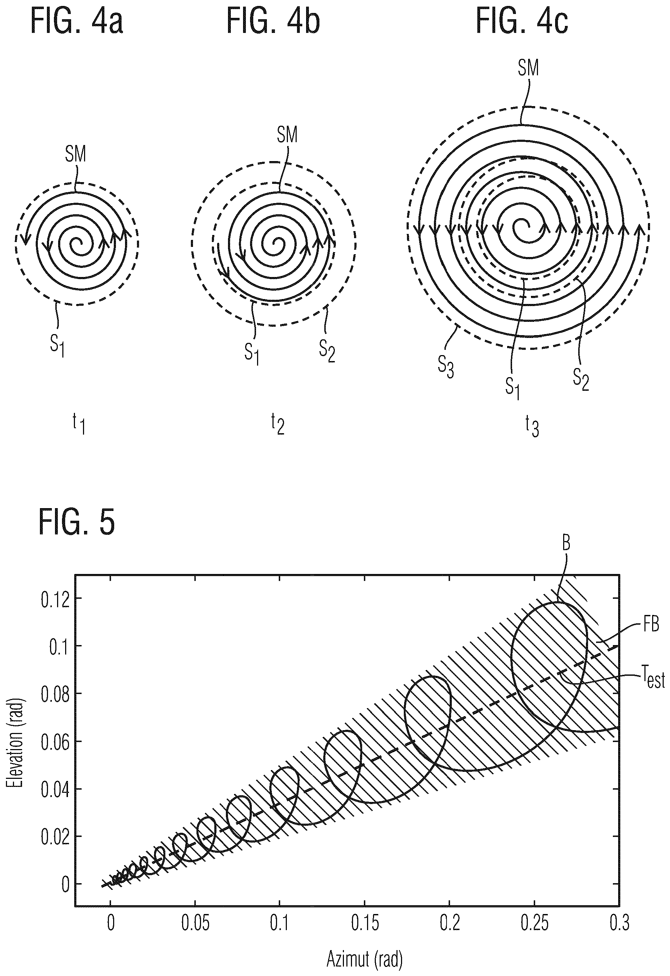

Nachfolgend werden anhand der Figuren 4a - 7 mehrere Beispiele beschrieben, die veranschaulichen, wie im Suchbetrieb während einer Strahlunterbrechung innerhalb der räumlichen Suchbereiche das Mess-Lichtbündel geeignet im Raum bewegt werden kann.

Sobald wie erläutert der Verlust des Retroreflektors und damit das Eintreten einer Strahlunterbrechung festgestellt wird, soll das emittierte Mess-Lichtbündel im Suchbetrieb durch die Verfolgungsaktuatorik und damit durch geeignete Rotationsbewegungen um die Azimut- und Elevationsachse entlang eines Suchmusters in einem räumlichen Suchbereich entlang der geschätzten Trajektorie auf einer Suchbahn bewegt werden. Das Verfolgen dieser Suchbahn hat zum Ziel, dass das Mess-Lichtbündel nach dem Freiwerden der Sichtlinie den Retroreflektor möglichst schnell wieder so trifft, dass eine Nachführung in der eingangs erläuterten Art und Weise wieder möglich ist.

Die im Folgenden beispielhaft erläuterten und über die Suchmustererzeugungseinheit generierten Suchmuster stellen dabei lediglich die Abweichung der Suchbahn des Mess-Lichtbündels von der geschätzten Trajektorie innerhalb des jeweiligen räumlichen Suchbereichs dar. Die letztlich resultierende Gesamt-Bewegung des Mess-Lichtbündels bzw. Suchbahn ergibt sich aus der Überlagerung der geschätzten Trajektorie und den nachfolgend erläuterten Suchmustern.

Eine erste Möglichkeit sei mit Hilfe der Figuren 4a - 4c und 5 erläutert. Hierbei zeigen die Figuren 4a - 4c jeweils ein Suchmuster SM zu verschiedenen Zeitpunkten $t_1 < t_2 < t_3$ während des Suchbetriebs. Analog zum Beispiel in Figur 3 ist vorgesehen, dass der Suchbereich $S_i$ (i = 1, 2, 3) im Verlauf der Zeit vergrößert wird. Das heißt, die dem Suchbereich $S_2$ entsprechende Unsicherheitsellipse zum Zeitpunkt $t_2$ ist größer als die Unsicherheitsellipse bzw. der Suchbereich $S_1$ zum Zeitpunkt $t_1$. Nochmals größer als der Suchbereich $S_2$ ist schließlich der Suchbereich $S_3$ zum späteren Zeitpunkt $t_3$. Das jeweilige Suchmuster SM ist hier spiralförmig ausgebildet, d.h. das Mess-Lichtbündel bewegt sich auf einer Spiralbahn wiederholt von einem Zentrum des Suchbereichs $S_i$ (i = 1, 2, 3) zu einer Grenze des Suchbereichs $S_i$ (i = 1, 2, 3) und wieder zurück. Im konkret dargestellten Beispiel läuft das Mess-Lichtbündel gemäß Figur 4a zunächst vom Zentrum spiralförmig nach außen, bis es zum Zeitpunkt $t_1$ die Grenze des zu diesem Zeitpunkt gültigen Suchbereichs $S_1$ erreicht. Die Bewegungsrichtung kehrt sich darauf um und das Suchmuster SM wird dann in der entgegengesetzten Richtung bis zum Zentrum durchlaufen, das zum Zeitpunkt $t_2$ gemäß Figur 4b erreicht wird. Zum Zeitpunkt $t_2$ liegt wie aus Figur 4b ersichtlich bereits ein vergrößerter Suchbereich $S_2$ bzw. eine entsprechend vergrößerte Unsicherheitsellipse vor. Das Mess-Lichtbündel bewegt sich anschließend entlang des Suchmusters SM wieder spiralförmig nach außen bis zum Zeitpunkt $t_3$, zu dem gemäß Figur 4c die Grenze des dann gültigen Suchbereichs $S_3$ erreicht wird und wo dann erneut die Bewegungsrichtung wechselt usw.. In diesem Beispiel ist demnach vorgesehen, dass das Mess-Lichtbündel entlang eines spiralförmigen Suchmusters SM wiederholt von einem Zentrum des Suchbereichs $S_i$ (i = 1, 2, ...) zu einer Grenze des Suchbereichs $S_i$ (i = 1, 2, ...) und wieder zurück bewegt wird.

In Figur 5 ist die überlagerte Bewegung bzw. Suchbahn B des Mess-Lichtbündels aus der geschätz-

ten Trajektorie $T_{est}$ und dem spiralförmigen Suchmuster SM im Suchbetrieb gezeigt; strichliniert ist in der Figur zudem die geschätzte Trajektorie $T_{est}$ dargestellt. Deutlich ersichtlich ist aus dieser Figur, wie sich im Verlauf der Zeit die resultierende Suchbahn B des Mess-Lichtbündels im Suchbetrieb immer weiter von der geschätzten Trajektorie $T_{est}$ entfernt, also der räumliche Suchbereich $S_i$ (i = 1, 2, ...) um die geschätzte Trajektorie $T_{est}$ vergrößert wird. Ebenfalls dargestellt ist in Figur 5 der Fangbereich FB um die Suchbahn B, der letztlich den Bereich angibt, der mit Hilfe einer derartigen Suchbahn B nach dem verlorenen Retroreflektor abgesucht wird.

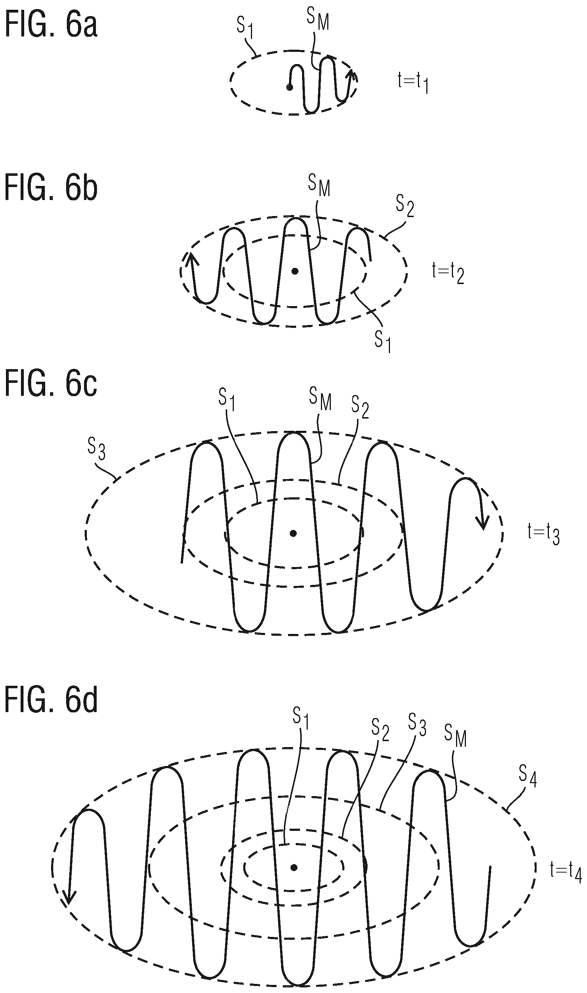

Ein weiteres Beispiel für ein geeignetes Suchmuster SM sei anhand der Figuren 6a - 6d erläutert. Dargestellt ist analog zum vorherigen Beispiel der jeweilige Suchbereich $S_1$ - $S_4$ bzw. die entsprechende Unsicherheitsellipse zu den verschiedenen Zeitpunkten $t_1 < t_2 < t_3 < t_4$ während des Suchbetriebs. Das Suchmuster SM innerhalb der Suchbereiche $S_1$ - $S_4$ ist hier schlangenförmig ausgebildet, das Mess-Lichtbündel bewegt sich innerhalb der Suchbereiche $S_1$ - $S_4$ entlang einer - hier horizontalen - Richtung zwischen den - vorliegend linken und rechten - Grenzen der Suchbereiche $S_1$ - $S_4$. Wie aus den Figuren ersichtlich, bilden die Grenzen der Suchbereiche $S_1$ - $S_4$ eine Einhüllende für das schlangenförmige Suchmuster SM. Entlang der in den Figuren vertikalen Richtung resultiert eine oszillatorische Bewegung des Mess-Lichtbündels, entlang der hierzu senkrechten, horizontalen Richtung liegt eine nahezu gleichförmige Bewegung vor. Die Umkehrpunkte im Suchmuster SM ergeben sich aus den sich mit der Zeit verändernden Grenzen der Suchbereiche $S_1$ - $S_4$. In diesem Beispiel ist demnach vorgesehen, dass das Mess-Lichtbündel entlang eines schlangenförmigen Suchmusters SM oszillierend um eine vorgegebene Richtung zwischen gegenüberliegenden Grenzen des Suchbereichs $S_i$, (i = 1, 2, ...) hin und her bewegt wird.

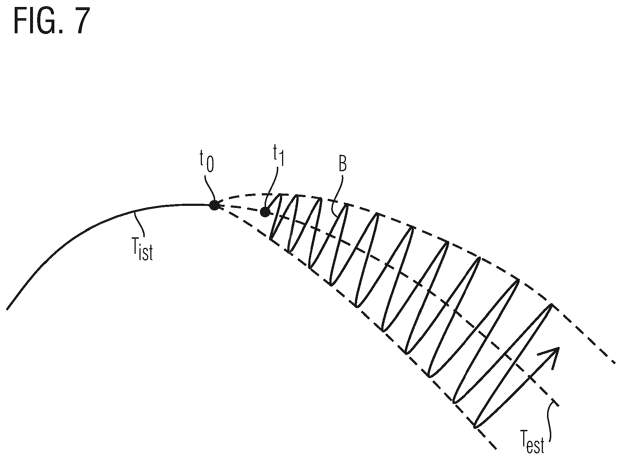

Figur 7 zeigt schließlich eine dritte Möglichkeit für ein geeignetes Vorgehen im Suchbetrieb gemäß der vorliegenden Erfindung, wenn der Retroreflektor verloren wurde. Die Figur zeigt hierbei analog zu Figur 5 bereits die Suchbahn B des Mess-Lichtbündels während des Suchbetriebs, die aus der Überlagerung eines Suchmusters und der geschätzten Trajektorie $T_{est}$ resultiert.

Bis zum Zeitpunkt $t_0$ der Strahlunterbrechung bewegt sich der Retroreflektor auf der Ist-Trajektorie $T_{ist}$. Nachdem wie oben erläutert festgestellt wurde, dass der Retroreflektor verloren ist, wird das Mess-Lichtbündel zunächst über eine vorgegebene Zeitdauer vom Zeitpunkt $t_0$ bis zum Zeitpunkt $t_1$ mit einer ersten Geschwindigkeit entlang der geschätzten Trajektorie $T_{est}$ bewegt. Auf diese Art und Weise soll sichergestellt werden, dass sich das suchende Mess-Lichtbündel hinter der tatsächlichen Position des verlorenen Retroreflektors befindet. Die in diesem Zeitraum vorgesehen Geschwindigkeit der Bewegung des Mess-Lichtbündels wird dabei deutlich kleiner als die Geschwindigkeit der Bewegung des Mess-Lichtbündels im vorhergehenden Messbetrieb gewählt.

Die Zeitdauer für diese Bewegung des Mess-Lichtbündels wird etwa in der abgeschätzten Größenordnung der Zeitdauer der Strahlunterbrechung gewählt. Ab dem Zeitpunkt $t_1$ wird die Geschwindigkeit des Mess-Lichtbündels entlang der geschätzten Trajektorie $T_{est}$ auf eine zweite Geschwindigkeit deutlich erhöht. Gleichzeitig wird ab diesem Zeitpunkt $t_1$ das Mess-Lichtbündel oszillierend um die geschätzte Trajektorie $T_{est}$ bewegt, wobei sich die Oszillationsamplitude wie aus der Figur ersichtlich im Verlauf der Suche vergrößert. Auch hier ist demnach im Suchbetrieb eine Vergrößerung des räumlichen Suchbereichs um die geschätzte Trajektorie $T_{est}$ vorgesehen.

Während des Suchbetriebs wird über die Signalverarbeitungseinheit laufend überprüft, ob sich der Retroreflektor im Fangbereich befindet und ob damit ein Nachführ-Regelungssignal auf Grundlage eines wieder auf dem positionsempfindlichen Detektor registrierten Mess-Lichtbündels erzeugbar ist. Sobald dies möglich ist, erfolgt die Nachführung des Lichtbündels dann nicht mehr auf Grundlage des über die Trajektorienschätzung erzeugten Nachführ-Regelungssignals sondern mit Hilfe des Nachführ-Regelungssignals, das wie oben erläutert aus der Position des Mess-Lichtbündels auf dem positionsempfindlichen Detektor erzeugt wird.

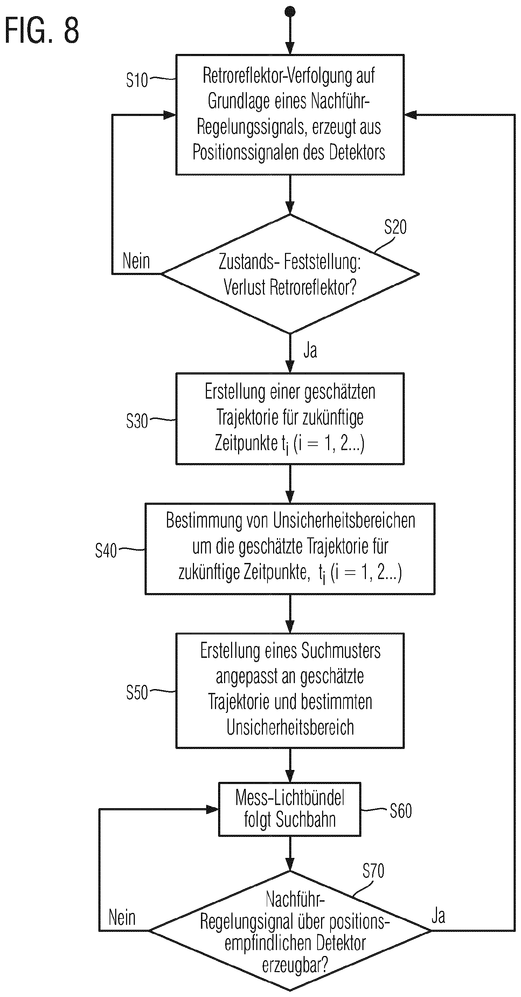

Maßgebliche Schritte des erfindungsgemäßen Verfahrens seien abschließend noch einmal zusammenfassend anhand des Flussdiagramms in Figur 8 erläutert.

Im Verfahrensschritt S10 erfolgt die Verfolgung des Retroreflektors durch das Mess-Lichtbündel im Messbetrieb noch in ungestörter Form. Aus dem vom Retroreflektor zurückreflektierten Mess-Lichtbündel gelangt ein Teil auf den positionsempfindlichen Detektor und die Signalverarbeitungseinheit erzeugt auf Grundlage von Positionssignalen des Detektors die Nachführ-Reglungssignale für die Verfolgungsaktuatorik. Das Mess-Lichtbündel wird über die Verfolgungs-Aktuatorik dem im Raum beweglichen Retroreflektor nachgeführt.

Gemäß dem Verfahrensschritt S20 wird über die Zustands-Feststellung laufend überprüft, ob der Retroreflektor über die entsprechenden Nachführ-Regelungssignale nachgeführt werden kann, die aus den Positionssignalen des positionsempfindlichen Detektors erzeugt werden oder ob ggf. der Retroreflektor verloren wurde, beispielsweise durch eine längere Strahlunterbrechung im Mess-Lichtbündel. Wie bereits erläutert kann dies z.B. durch einen Vergleich der über den Detektor ermittelten Intensität mit einem geeigneten Intensitäts-Schwellwert erfolgen.

Wird ein entsprechender Verlust des Retroreflektors festgestellt, so erfolgt gemäß dem Verfahrensschritt S30 mit Hilfe der Trajektorienschätzeinheit die Erstellung einer geschätzten Trajektorie des Retroreflektors für zukünftige Zeitpunkte $t_i$ (i = 1, 2, ..) aus Messwerten der Verfolgungsaktuatorik.

Aus der Trajektorienschätzung werden über die Signalverarbeitungseinheit ferner gemäß dem Verfahrensschritt S40 Unsicherheits- bzw. Suchbereiche um die geschätzte Trajektorie für zukünftige Zeitpunkte $t_i$ (i = 1, 2, ..) bestimmt.

Im Verfahrensschritt S50 wird schließlich über die Suchmustererzeugungseinheit ein geeignetes Suchmuster erstellt, angepasst an die geschätzte Trajektorie und den bestimmten Suchbereich.

Das Mess-Lichtbündel wird dann mit Hilfe der Verfolgungsaktuatorik über die aus dem bestimmten Suchmuster und der geschätzten Trajektorie abgeleiteten Nachführ-Regelungssignale entlang einer entsprechenden Suchbahn bewegt (Verfahrensschritt S60).

Während des Suchbetriebs wird gemäß dem Verfahrensschritt S70 laufend überprüft, ob wieder ein Nachführ-Regelungssignal über den positionsempfindlichen Detektor erzeugbar ist, also ob sich der Retroreflektor wieder im Fangbereich des Detektors befindet. Wenn dies der Fall ist, wird der Suchbetrieb beendet und es kann die Retroreflektor-Verfolgung und damit der reguläre Messbetrieb gemäß dem Verfahrensschritt S10 wieder aufgenommen werden; andernfalls wird das Mess-Lichtbündel gemäß dem Verfahrensschritt S60 im Suchbetrieb weiter entlang der bestimmten Suchbahn bewegt.

Neben den erläuterten Ausführungsbeispielen und Varianten der erfindungsgemäßen Vorrichtung bzw. des erfindungsgemäßen Verfahrens selbstverständlich noch weitere Ausgestaltungsmöglichkeiten.

So wäre es etwa wie oben bereits angedeutet möglich, alternative Abstandsmessverfahren zum erläuterten interferometrischen Verfahren einzusetzen.

Desweiteren gibt es auch alternative Möglichkeiten, die Trajektorie des Mess-Lichtbündels für den Suchbetrieb abzuschätzen. So wäre hierzu anstelle eines Kalman-Filters auch eine Trajektorien-Extrapolation mit Hilfe eines sogenannten Polynomfits möglich.

Ferner könnte die Lichtquelle, ausgebildet als Halbleiterlaser bzw. Laserdiode, auch in der Optik-Baueinheit angeordnet sein usw.

**Patentansprüche**

1.  Verfahren zur Verfolgung eines im Raum beweglichen Retroreflektors (40), wobei

    - eine Lichtquelle (11) ein Mess-Lichtbündel ($L_M$) in Richtung des Retroreflektors (40) emittiert, von dem dieses entgegen der Einfallsrichtung zurückreflektiert wird und zumindest ein Teil des zurückreflektierten Mess-Lichtbündels ($L_M$') auf einen positionsempfindlichen Detektor (17) einfällt, und
    - über eine Signalverarbeitungseinrichtung (20) abhängig von der Position des Mess-Lichtbündels ($L_M$') auf dem Detektor (17) ein Nachführ-Regelungssignal (RS) erzeugt wird, wobei das Nachführ-Regelungssignal (RS) von einer Verfolgungsaktuatorik (30) genutzt wird, um das Mess-Lichtbündel ($L_M$) dem Retroreflektor (40) nachzuführen, und
    - über die Signalverarbeitungseinrichtung (20) laufend eine Zustands-Feststellung dahingehend erfolgt, ob das Mess-Lichtbündel ($L_M$) über die Verfolgungsaktuatorik (30) dem Retroreflektor (40) nachführbar ist oder ob der Retroreflektor (40) verloren wurde, und
    - wobei im Fall eines festgestellten Verlusts des Retroreflektors (40) in einem Suchbetrieb eine Trajektorienschätzung basierend auf Messwerten (MW) der Verfolgungsaktuatorik (30) vorgenommen wird, um eine geschätzte Trajektorie ($T_{est}$) des Retroreflektors (40) für zukünftige Zeitpunkte ($t_i$, i = 1, 2...) zu bestimmen, und
    - Suchbereiche ($S_i$, i = 1, 2..) um die geschätzte Trajektorie ($T_{est}$) für zukünftige Zeitpunkte $t_i$ (i = 1, 2, ..) bestimmt werden, wobei sich die Suchbereiche ($S_i$, i = 1, 2..) für unterschiedliche Zeitpunkte $t_i$ (i = 1, 2, ..) unterscheiden, und
    - ein an die geschätzte Trajektorie und die bestimmten Suchbereiche ($S_i$, i = 1, 2..) angepasstes Suchmuster (SM) erstellt wird, und
    - das Mess-Lichtbündel ($L_M$) dann mit Hilfe der Verfolgungsaktuatorik (30) über Nachführ-Regelungssignale (RS) entlang einer entsprechenden Suchbahn (B) bewegt wird, wobei die Nachführ-Regelungssignale (RS) aus der geschätzten Trajektorie ($T_{est}$) und dem bestimmten Suchmuster (SM) abgeleitet werden, und wobei
    - der Suchbetrieb beendet wird, sobald wieder ein Nachführ-Regelungssignal (RS) über den positionsempfindlichen Detektor (17) erzeugbar ist.

2.  Verfahren nach Anspruch 1, wobei die räumlichen Suchbereiche ($S_i$, i = 1, 2, ..) um die geschätzte Trajektorie ($T_{est}$) des Retroreflektors (40) im Verlauf der Suche vergrößert werden.

3.  Verfahren nach Anspruch 1 oder 2, wobei das Mess-Lichtbündel ($L_M$) entlang eines spiralförmigen Suchmusters (SM) wiederholt von einem Zentrum eines Suchbereichs ($S_i$, i = 1, 2, ..) zu einer Grenze des Suchbereichs ($S_i$, i = 1, 2, ..) und wieder zurück bewegt wird.

4.  Verfahren nach Anspruch 1 oder 2, wobei das Mess-Lichtbündel ($L_M$) entlang eines schlangenförmigen Suchmusters (SM) oszillierend um eine vorgegebene Richtung zwischen gegenüberliegenden Grenzen eines Suchbereichs ($S_i$, i = 1, 2, ..) hin und her bewegt wird.

5.  Verfahren nach Anspruch 1 oder 2, wobei das Mess-Lichtbündel ($L_M$) zunächst über eine vorgegebene Zeitdauer mit einer ersten Geschwindigkeit entlang

der geschätzten Trajektorie ($T_{est}$) des Retroreflektors (40) bewegt wird und nach der vorgegebenen Zeitdauer das Mess-Lichtbündel ($L_M$) mit einer zweiten Geschwindigkeit, die höher als die erste Geschwindigkeit ist, oszillierend um die geschätzte Trajektorie ($T_{est}$) bewegt wird, wobei sich im Verlauf der Suche die Oszillations-Amplitude vergrößert.

6. Verfahren nach mindestens einem der vorhergehenden Ansprüche, wobei die Trajektorienschätzung mit Hilfe eines Kalman-Filters vorgenommen wird, über den die bis zum Verlust des Retroreflektors (40) zurückgelegte Ist-Trajektorie ($T_{ist}$) des Retroreflektors (40) extrapoliert wird.

7. Verfahren nach Anspruch 6, wobei als Messwerte (MW) zur Trajektorienschätzung zumindest Winkelmesswerte der Verfolgungsaktuatorik (30) herangezogen werden, die aus der Rotation des Mess-Lichtbündels ($L_M$) um zwei senkrecht zueinander orientierte Rotationsachsen (A1, A2) der Verfolgungsaktuatorik (30) gewonnen werden.

8. Verfahren nach Anspruch 6, wobei über den Kalman-Filter desweiteren Suchbereiche ($S_i$, i = 1, 2..) um die geschätzte Trajektorie ($T_{est}$) für eine Mehrzahl von Zeitpunkten ($t_i$, i = 1, 2, ..) im Verlauf der Suche bestimmt werden.

9. Verfahren nach mindestens einem der vorhergehenden Ansprüche, wobei zur Zustands-Feststellung die Intensität des auf den Detektor (17) einfallenden Mess-Lichtbündels ($L_M$) bestimmt, mit mindestens einem vorgegebenen Intensitäts-Schwellwert verglichen und abhängig vom Vergleichsergebnis die Zustands-Feststellung vorgenommen wird.

10. Vorrichtung zur Verfolgung eines im Raum beweglichen Retroreflektors (40), mit

- einer Lichtquelle (11), die ein Mess-Lichtbündel ($L_M$) in Richtung des Retroreflektors (40) emittiert, der dieses entgegen der Einfallsrichtung zurückreflektiert, und
- einem positionsempfindlichen Detektor (17), auf den zumindest ein Teil des zurückreflektierten Mess-Lichtbündels ($L_M$') einfällt, und
- einer Signalverarbeitungseinrichtung (20), die dazu ausgebildet und eingerichtet ist, um

- abhängig von der Position des Mess-Lichtbündels ($L_M$') auf dem Detektor (17) ein Nachführ-Regelungssignal (RS) zu erzeugen, wobei das Nachführ-Regelungssignal (RS) von einer Verfolgungsaktuatorik (30) nutzbar ist, um das Mess-Lichtbündel ($L_M$) dem Retoreflektor (40) nachzuführen, und
- laufend eine Zustands-Feststellung dahingehend vorzunehmen, ob das Mess-Lichtbündel ($L_M$) über die Verfolgungsaktuatorik (30) dem Retroreflektor (40) nachführbar ist oder ob der Retroreflektor (40) verloren wurde, und

- im Fall eines festgestellten Verlusts des Retroreflektors (40) in einem Suchbetrieb eine Trajektorienschätzung basierend auf Messwerten (MW) der Verfolgungsaktuatorik (30) vorzunehmen, um eine geschätzte Trajektorie ($T_{est}$) des Retroreflektors (40) für zukünftige Zeitpunkte ($t_i$, i = 1, 2...) zu bestimmen, und
- Suchbereiche ($S_i$, i = 1, 2..) um die geschätzte Trajektorie ($T_{est}$) für zukünftige Zeitpunkte $t_i$ (i = 1, 2, ..) zu bestimmen, wobei sich die Suchbereiche ($S_i$, i = 1, 2..) für unterschiedliche Zeitpunkte $t_i$ (i = 1, 2, ..) unterscheiden, und
- ein an die geschätzte Trajektorie und die bestimmten Suchbereiche ($S_i$, i = 1, 2..) angepasstes Suchmuster (SM) zu erstellen, und
- das Mess-Lichtbündel ($L_M$) dann mit Hilfe der Verfolgungsaktuatorik (30) über Nachführ-Regelungssignale (RS) entlang einer entsprechenden Suchbahn (B) zu bewegen, wobei die Nachführ-Regelungssignale (RS) aus der geschätzten Trajektorie ($T_{est}$) und dem bestimmten Suchmuster (SM) abgeleitet sind, und wobei
- eine Beendigung des Suchbetriebs erfolgt, sobald wieder ein Nachführ-Regelungssignal (RS) über den positionsempfindlichen Detektor (17) erzeugbar ist.

11. Vorrichtung nach Anspruch 10, wobei die Signalverarbeitungseinrichtung (20) dazu ausgebildet und eingerichtet ist, um im Verlauf der Suche die räumlichen Suchbereiche ($S_i$, i = 1, 2, ..) um die geschätzte Trajektorie ($T_{est}$) zu vergrößern.

12. Vorrichtung nach Anspruch 10 oder 11, wobei die Verfolgungsaktuatorik (30) zwei Antriebe (31.1, 31.2) umfasst, die eine Rotation des Mess-Lichtbündels ($L_M$) um zwei zueinander orthogonale Rotationsachsen (A1, A2) ermöglichen und jeder Rotationsachse (A1, A2) eine Winkelmesseinrichtung (32.1, 32.2) zugeordnet ist, deren Winkelmesswerte die Signalverarbeitungseinrichtung (20) zur Trajektorienschätzung verwendet.

13. Vorrichtung nach Anspruch 10, wobei der positionsempfindliche Detektor (17) als 4-Quadranten-Diode oder als positionsempfindliche Diode ausgebildet ist.

14. Vorrichtung nach Anspruch 10 mit einer Optik-Baueinheit (10), die mindestens zwei Strahlteiler (14, 16), einen Referenz-Reflektor (15), eine Abstandsmessungs-Detektionseinheit (18) sowie den positionsempfindlichen Detektor (17) umfasst, wobei der Optik-Baugruppe (10) ein von der Lichtquelle (11) emittiertes Lichtbündel (L) zuführbar ist, so dass

- das zugeführte Lichtbündel (L) in der Optik-Baueinheit (10) auf einen ersten Strahlteiler (14) trifft, der das darauf einfallende Lichtbündel (L) in das Mess-Lichtbündel ($L_M$) und ein Referenz-Lichtbündel ($L_R$) aufspaltet, und
- das Mess-Lichtbündel ($L_M$) in Richtung des Retroreflektors (40) und das Referenz-Lichtbündel ($L_R$) in Richtung des Referenz-Reflektors (15) propagiert, und
- das vom Referenz-Reflektor (15) zurückreflektierte Referenz-Lichtbündel ($L_R$) erneut auf den ersten Strahlteiler (14) trifft, und
- das vom Retroreflektor (40) zurückreflektierte Mess-Lichtbündel ($L_M$) auf einen zweiten Strahlteiler (16) trifft, über den die Auskopplung eines Teils des Mess-Lichtbündels ($L_M$') auf den positionsempfindlichen Detektor (17) erfolgt und der restliche Teil des zurückreflektierten Mess-Lichtbündels ($L_M$) erneut auf den ersten Strahlteiler (14) trifft, wo eine Überlagerung mit dem Referenz-Lichtbündel ($L_R$) erfolgt, und
- das überlagerte Mess- und Referenz-Lichtbündel ($L_M$, $L_R$) in Richtung der Abstandsmessungs-Detektionseinheit (18) propagiert.

**Claims**

1. Method for tracking a retroreflector (40) that is movable through space, wherein

- a light source (11) emits a measuring light beam ($L_M$) in the direction of the retroreflector (40), off which said light beam is retroreflected oppositely to the direction of incidence and at least some of the retroreflected measuring light beam ($L_M$') is incident on a position-sensitive detector (17), and
- a tracking control signal (RS) is generated by way of a signal processing device (20) on the basis of the position of the measuring light beam ($L_M$') on the detector (17), wherein the tracking control signal (RS) is used by a tracking actuator system (30) to track the retroreflector (40) with the measuring light beam ($L_M$), and
- a state is continuously determined by way of the signal processing device (20), to the effect of whether the measuring light beam ($L_M$) can track the retroreflector (40) by way of the tracking actuator system (30) or whether the retroreflector (40) has been lost, and

- wherein, should a loss of the retroreflector (40) be determined, a trajectory is estimated in a search operation on the basis of measured values (MW) from the tracking actuator system (30), in order to determine an estimated trajectory ($T_{est}$) of the retroreflector (40) for future times ($t_i$, i = 1, 2...), and
- search regions ($S_i$, i = 1, 2..) around the estimated trajectory ($T_{est}$) are determined for future times $t_i$, (i = 1, 2, ..), with the search regions ($S_i$, i = 1, 2..) differing for different times $t_i$, (i = 1, 2, ..), and
- a search pattern (SM) matched to the estimated trajectory and the determined search regions ($S_i$, i = 1, 2..) is created, and
- the measuring light beam ($L_M$) is then moved along a corresponding search path (B) with the aid of the tracking actuator system (30) by way of tracking control signals (RS), wherein the tracking control signals (RS) are derived from the estimated trajectory (Test) and the determined search pattern (SM), and wherein
- the search operation is terminated as soon as a tracking control signal (RS) can be generated by way of the position-sensitive detector (17) again.

2. Method according to Claim 1, wherein the spatial search regions ($S_i$, i = 1, 2, ..) around the estimated trajectory ($T_{est}$) of the retroreflector (40) are enlarged over the course of the search.

3. Method according to Claim 1 or 2, wherein the measuring light beam ($L_M$) is repeatedly moved along a spiral search pattern (SM) from a centre of a search region ($S_i$, i = 1, 2, ..) to a boundary of the search region ($S_i$, i = 1, 2, ..) and back again.

4. Method according to Claim 1 or 2, wherein the measuring light beam ($L_M$) is moved along a serpentine search pattern (SM) in a manner oscillating back and forth between opposing boundaries of a search region ($S_i$, i = 1, 2, ..) about a predetermined direction.

5. Method according to Claim 1 or 2, wherein the measuring light beam ($L_M$) is initially moved at a first speed along the estimated trajectory ($T_{est}$) of the retroreflector (40) over a predetermined period of time, and, after the predetermined period of time, the measuring light beam ($L_M$) is moved at a second speed, which is higher than the first speed, in a manner oscillating around the estimated trajectory ($T_{est}$), with the oscillation amplitude increasing over the course of the search.

6. Method according to at least one of the preceding claims, wherein the trajectory is estimated with the aid of a Kalman filter, by means of which the actual trajectory ($T_{ist}$) of the retroreflector (40) traversed until the loss of the retroreflector (40) is extrapolated.

7. Method according to Claim 6, wherein at least measured angle values of the tracking actuator system (30), which are obtained from the rotation of the measuring light beam ($L_M$) about two rotational axes (A1, A2) of the tracking actuator system (30) that are oriented perpendicular to each other, are used as measured values (MW) for the trajectory estimation.

8. Method according to Claim 6, wherein further search regions ($S_i$, i = 1, 2..) around the estimated trajectory ($T_{est}$) are determined by way of the Kalman filter for a plurality of times ($t_i$, i = 1, 2, ..) over the course of the search.

9. Method according to at least one of the preceding claims, wherein, in order to determine the state, the intensity of the measuring light beam ($L_M$) incident on the detector (17) is determined and compared with at least one predetermined intensity threshold value, and the state is determined on the basis of the comparison result.

10. Apparatus for tracking a retroreflector (40) that is movable through space, having

    - a light source (11) which emits a measuring light beam ($L_M$) in the direction of the retroreflector (40), which retroreflects said light beam oppositely to the direction of incidence, and
    - a position-sensitive detector (17) on which at least some of the retroreflected measuring light beam ($L_M'$) is incident, and
    - a signal processing device (20) which is designed and configured to
    - generate a tracking control signal (RS) on the basis of the position of the measuring light beam ($L_M'$) on the detector (17), wherein the tracking control signal (RS) can be used by a tracking actuator system (30) to track the retroreflector (40) with the measuring light beam ($L_M$), and
    - continuously determine a state, to the effect of whether the measuring light beam ($L_M$) can track the retroreflector (40) by way of the tracking actuator system (30) or whether the retroreflector (40) has been lost, and
    - should a loss of the retroreflector (40) be determined, estimate a trajectory in a search operation on the basis of measured values (MW) from the tracking actuator system (30), in order to determine an estimated trajectory ($T_{est}$) of the retroreflector (40) for future times ($t_i$, i = 1, 2...), and
    - determine search regions ($S_i$, i = 1, 2..) around the estimated trajectory ($T_{est}$) for future times $t_i$ (i = 1, 2, ..), with the search regions ($S_i$, i = 1, 2..) differing for different times $t_i$ (i = 1, 2,..), and

    - create a search pattern (SM) matched to the estimated trajectory and the determined search regions ($S_i$, i = 1, 2..), and
    - then move the measuring light beam ($L_M$) along a corresponding search path (B) with the aid of the tracking actuator system (30) by way of tracking control signals (RS), wherein the tracking control signals (RS) are derived from the estimated trajectory ($T_{est}$) and the determined search pattern (SM), and wherein
    - the search operation is terminated as soon as a tracking control signal (RS) can be generated by way of the position-sensitive detector (17) again.

11. Apparatus according to Claim 10, wherein the signal processing device (20) is designed and configured to enlarge the spatial search regions ($S_i$, i = 1, 2, ..) around the estimated trajectory ($T_{est}$) over the course of the search.

12. Apparatus according to Claim 10 or 11, wherein the tracking actuator system (30) comprises two drives (31.1, 31.2) which allow a rotation of the measuring light beam ($L_M$) about two rotation axes (A1, A2) which are orthogonal to each other, and each rotation axis (A1, A2) is assigned an angle measuring device (32.1, 32.2), the measured angle values of which are used by the signal processing device (20) to estimate the trajectory.

13. Apparatus according to Claim 10, wherein the position-sensitive detector (17) is in the form of a 4-quadrant diode or a position-sensitive diode.

14. Apparatus according to Claim 10, having an optical assembly (10) comprising at least two beam splitters (14, 16), a reference reflector (15), a distance measurement detection unit (18) and the position-sensitive detector (17), wherein a light beam (L) emitted by the light source (11) can be supplied to the optical assembly (10) such that

    - the supplied light beam (L) is incident on a first beam splitter (14) in the optical assembly (10), said first beam splitter splitting the incident light beam (L) into the measuring light beam ($L_M$) and a reference light beam ($L_R$), and
    - the measuring light beam ($L_M$) propagates in the direction of the retroreflector (40), and the reference light beam ($L_R$) propagates in the direction of the reference reflector (15), and
    - the reference light beam ($L_R$) retroreflected off the reference reflector (15) is incident on the first beam splitter (14) again, and
    - the measuring light beam ($L_M$) retroreflected off the retroreflector (40) is incident on a second beam splitter (16) by means of which some of the measuring light beam ($L_M'$) is output coupled to the position-sensitive detector (17), and the remaining portion of the retroreflected measuring light beam (L_M) is incident on the first beam splitter (14) again, where the reference light beam (L_R) is superimposed, and
- the superimposed measuring and reference light beams (L_M, L_R) propagate in the direction of the distance measurement detection unit (18).

**Revendications**

1. Procédé de suivi d'un rétroréflecteur (40) mobile dans l'espace, dans lequel

   - une source lumineuse (11) émet un faisceau lumineux de mesure (L_M) en direction du rétroréflecteur (40), par lequel celui-ci est rétroréfléchi à l'opposé de la direction d'incidence et au moins une partie du faisceau lumineux de mesure rétroréfléchi (L_M') est incidente sur un détecteur sensible à la position (17), et
   - par l'intermédiaire d'un dispositif de traitement de signaux (20), un signal de régulation de poursuite (RS) est généré en fonction de la position du faisceau lumineux de mesure (L_M') sur le détecteur (17), le signal de régulation de poursuite (RS) étant utilisé par un système d'actionneurs de suivi (30) pour assurer la poursuite du faisceau lumineux de mesure (L_M) par rapport au rétroréflecteur (40), et
   - par l'intermédiaire du dispositif de traitement de signaux (20), une détermination d'état est effectuée en continu pour déterminer si le faisceau lumineux de mesure (L_M) peut être maintenu en poursuite du rétroréflecteur (40) par l'intermédiaire du système d'actionneurs de suivi (30) ou si le rétroréflecteur (40) a été perdu, et
   - dans lequel, en cas de perte constatée du rétroréflecteur (40), une estimation de trajectoire est effectuée dans un mode de recherche sur la base de valeurs de mesure (MW) du système d'actionneurs de suivi (30) afin de déterminer une trajectoire estimée (T_est) du rétroréflecteur (40) pour des instants futurs (t_i, i = 1, 2...), et
   - des zones de recherche (S_i, i = 1, 2..) sont déterminées autour de la trajectoire estimée (T_est) pour des instants futurs t_i (i = 1, 2...), les zones de recherche (S_i, i = 1, 2..) étant différentes pour différents instants t_i, (i = 1, 2, ..), et
   - un motif de recherche (SM) adapté à la trajectoire estimée et aux zones de recherche (S_i, i = 1, 2..) déterminées est créé, et
   - le faisceau lumineux de mesure (L_M) est ensuite déplacé le long d'un parcours de recherche correspondant (B) à l'aide du système d'actionneurs de suivi (30) par l'intermédiaire de signaux de régulation de poursuite (RS), les signaux de régulation de poursuite (RS) étant dérivés de la trajectoire estimée (Test) et du motif de recherche (SM) déterminé, et dans lequel
   - le mode de recherche est interrompu dès qu'un signal de régulation de poursuite (RS) peut de nouveau être généré par l'intermédiaire du détecteur sensible à la position (17).

2. Procédé selon la revendication 1, dans lequel les zones de recherche spatiales (S_i, i = 1, 2, ..) autour de la trajectoire estimée (T_est) du rétroréflecteur (40) sont agrandies au cours de la recherche.

3. Procédé selon la revendication 1 ou 2, dans lequel le faisceau lumineux de mesure (L_M) est déplacé de manière répétée le long d'un motif de recherche en forme de spirale (SM), depuis un centre d'une zone de recherche (S_i, i = 1, 2, ..) vers une limite de la zone de recherche (S_i, i = 1, 2, ..) et inversement.

4. Procédé selon la revendication 1 ou 2, dans lequel le faisceau lumineux de mesure (L_M) est déplacé par va- et-vient de manière oscillante le long d'un motif de recherche en serpentin (SM) autour d'une direction prédéfinie entre des limites opposées d'une zone de recherche (S_i, i = 1, 2, ..).

5. Procédé selon la revendication 1 ou 2, dans lequel le faisceau lumineux de mesure (L_M) est d'abord déplacé pendant une durée prédéfinie à une première vitesse le long de la trajectoire estimée (T_est) du rétroréflecteur (40) et, après la durée prédéfinie, le faisceau lumineux de mesure (L_M) est déplacé de manière oscillante autour de la trajectoire estimée (T_est) à une seconde vitesse, laquelle est supérieure à la première vitesse, l'amplitude d'oscillation augmentant au cours de la recherche.

6. Procédé selon au moins l'une quelconque des revendications précédentes, dans lequel l'estimation de trajectoire est effectuée à l'aide d'un filtre de Kalman, par l'intermédiaire duquel la trajectoire réelle (T_ist) du rétroréflecteur (40) parcourue jusqu'à la perte du rétroréflecteur (40) est extrapolée.

7. Procédé selon la revendication 6, dans lequel au moins des valeurs de mesure d'angle du système d'actionneurs de suivi (30) sont utilisées comme valeurs de mesure (MW) pour l'estimation de trajectoire, lesquelles sont obtenues à partir de la rotation du faisceau lumineux de mesure (L_M) autour de deux axes de rotation (A1, A2) du système d'actionneurs de suivi (30) orientés perpendiculairement l'un à l'autre.

8. Procédé selon la revendication 6, dans lequel des zones de recherche (S_i, i = 1, 2..) autour de la

trajectoire estimée ($T_{est}$) sont en outre déterminées par l'intermédiaire du filtre de Kalman pour une pluralité d'instants ($t_i$, i = 1, 2, ..) au cours de la recherche.

9. Procédé selon au moins l'une quelconque des revendications précédentes, dans lequel, pour la détermination d'état, l'intensité du faisceau lumineux de mesure ($L_M$) incident sur le détecteur (17) est déterminée et comparée à au moins une valeur de seuil d'intensité prédéfinie, et la détermination d'état est effectuée en fonction du résultat de la comparaison.

10. Dispositif de suivi d'un rétroréflecteur (40) mobile dans l'espace, comprenant

> - une source lumineuse (11) qui émet un faisceau lumineux de mesure ($L_M$) en direction du rétroréflecteur (40), lequel rétroréfléchit celui-ci à l'opposé de la direction d'incidence, et
> - un détecteur sensible à la position (17) sur lequel est incidente au moins une partie du faisceau lumineux de mesure rétroréfléchi ($L_M'$), et
> - un dispositif de traitement de signaux (20) qui est réalisé et conçu pour
> - générer un signal de régulation de poursuite (RS) en fonction de la position du faisceau lumineux de mesure ($L_M'$) sur le détecteur (17), le signal de régulation de poursuite (RS) pouvant être utilisé par un système d'actionneurs de suivi (30) pour que le faisceau lumineux de mesure ($L_M$) poursuive le rétroréflecteur (40), et
> - effectuer en continu une détermination d'état pour déterminer si le faisceau lumineux de mesure ($L_M$) peut être maintenu en poursuite du rétroréflecteur (40) par l'intermédiaire du système d'actionneurs de suivi (30) ou si le rétroréflecteur (40) a été perdu, et
> - effectuer, en cas de perte constatée du rétroréflecteur (40), une estimation de trajectoire dans un mode de recherche sur la base de valeurs de mesure (MW) du système d'actionneurs de suivi (30) afin de déterminer une trajectoire estimée ($T_{est}$) du rétroréflecteur (40) pour des instants futurs ($t_i$, i = 1, 2...), et
> - déterminer des zones de recherche ($S_i$, i = 1, 2..) autour de la trajectoire estimée ($T_{est}$) pour des instants futurs $t_i$ (i = 1, 2, ..), les zones de recherche ($S_i$, i = 1, 2..) étant différentes pour différents instants $t_i$ (i = 1, 2,..), et
> - créer un motif de recherche (SM) adapté à la trajectoire estimée et aux zones de recherche ($S_i$, i = 1, 2..) déterminées, et
> - déplacer ensuite le faisceau lumineux de mesure ($L_M$ le long d'un parcours de recherche correspondant (B) à l'aide du système d'actionneurs de suivi (30) par l'intermédiaire de signaux de régulation de poursuite (RS), les signaux de régulation de poursuite (RS) étant dérivés de la trajectoire estimée ($T_{est}$) et du motif de recherche (SM) déterminé, et dans lequel
> - une interruption du mode de recherche intervient dès qu'un signal de régulation de poursuite (RS) peut de nouveau être généré par l'intermédiaire du détecteur sensible à la position (17).

11. Dispositif selon la revendication 10, dans lequel le dispositif de traitement de signaux (20) est réalisé et conçu pour agrandir, au cours de la recherche, les zones de recherche spatiales ($S_i$, i = 1, 2, ..) autour de la trajectoire estimée ($T_{est}$).

12. Dispositif selon la revendication 10 ou 11, dans lequel le système d'actionneurs de suivi (30) comprend deux entraînements (31.1, 31.2) qui permettent une rotation du faisceau lumineux de mesure ($L_M$) autour de deux axes de rotation (A1, A2) orthogonaux l'un à l'autre, et un dispositif de mesure d'angle (32.1, 32.2) est associé à chaque axe de rotation (A1, A2), le dispositif de traitement de signaux (20) utilisant les valeurs de mesure d'angle de ces dispositifs pour l'estimation de trajectoire.

13. Dispositif selon la revendication 10, dans lequel le détecteur sensible à la position (17) est réalisé sous la forme d'une diode à 4 quadrants ou sous la forme d'une diode sensible à la position.

14. Dispositif selon la revendication 10, comprenant une unité optique (10) qui comprend au moins deux diviseurs de faisceau (14, 16), un réflecteur de référence (15), une unité de détection de mesure de distance (18) ainsi que le détecteur sensible à la position (17), un faisceau lumineux (L) émis par la source lumineuse (11) pouvant être acheminé vers l'unité optique (10) de telle sorte que

> - le faisceau lumineux (L) acheminé est incident, dans l'unité optique (10), sur un premier diviseur de faisceau (14) qui divise le faisceau lumineux (L) incident sur celui-ci en le faisceau lumineux de mesure ($L_M$) et un faisceau lumineux de référence ($L_R$), et
> - le faisceau lumineux de mesure ($L_M$) se propage en direction du rétroréflecteur (40) et le faisceau lumineux de référence ($L_R$) se propage en direction du réflecteur de référence (15), et
> - le faisceau lumineux de référence ($L_R$) rétroréfléchi par le réflecteur de référence (15) est à nouveau incident sur le premier diviseur de faisceau (14), et
> - le faisceau lumineux de mesure ($L_M$) rétroréfléchi par le rétroréflecteur (40) est incident sur un second diviseur de faisceau (16), par l'intermédiaire duquel s'effectue l'extraction d'une partie du faisceau lumineux de mesure ($L_M'$) vers le détecteur sensible à la position (17), et la partie restante du faisceau lumineux de mesure ($L_M$) rétroréfléchi est de nouveau incident sur le premier diviseur de faisceau (14) où s'effectue une superposition au faisceau lumineux de référence ($L_R$), et

- les faisceaux lumineux de mesure et de référence ($L_M$, $L_R$) superposés se propagent en direction de l'unité de détection de mesure de distance (18).

# FIG. 1a

# FIG. 1b

# FIG. 2

FIG. 3

# FIG. 4a

$t_1$

# FIG. 4b

$t_2$

# FIG. 4c

$t_3$

# FIG. 5

FIG. 6a

FIG. 6b

FIG. 6c

FIG. 6d

FIG. 7

**FIG. 8**

S10 — Retroreflektor-Verfolgung auf Grundlage eines Nachführ-Regelungssignals, erzeugt aus Positionssignalen des Detektors

Nein — S20 Zustands- Feststellung: Verlust Retroreflektor?

Ja

S30 — Erstellung einer geschätzten Trajektorie für zukünftige Zeitpunkte $t_i$ (i = 1, 2...)

S40 — Bestimmung von Unsicherheitsbereichen um die geschätzte Trajektorie für zukünftige Zeitpunkte, $t_i$ (i = 1, 2...)

S50 — Erstellung eines Suchmusters angepasst an geschätzte Trajektorie und bestimmten Unsicherheitsbereich

Mess-Lichtbündel folgt Suchbahn — S60

Nein — S70 Nachführ-Regelungsignal über positions-empfindlichen Detektor erzeugbar? — Ja

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2118682 B1

**In der Beschreibung aufgeführte Nicht-Patentliteratur**

- **DAN SIMON**. Optimal State Estimation - Kalman, H∞, and Nonlinear Approaches. Verlag John Wiley & Sons Inc., 2006